# EUROPEAN PATENT SPECIFICATION

(11) **EP 4 182 870 B1**
(45) Date of publication and mention of the grant of the patent: **15.11.2023**
(21) Application number: 21785814.1
(22) Date of filing: 27.09.2021
(51) Int. Cl.: G06Q 30/00, H04L 9/32, G06Q 30/018, G06Q 30/0207, G06Q 30/0241, G06Q 50/18, H04L 9/00, H04L 9/40

(54) **IDENTIFYING DERIVATIVES OF DATA ITEMS**
IDENTIFIZIERUNG VON DERIVATEN VON DATENELEMENTEN
IDENTIFICATION DE DÉRIVÉS D'ÉLÉMENTS DE DONNÉES

(30) Priority: 29.09.2020 GB 202015403
(43) Date of publication of application: 24.05.2023
(73) Proprietor: British Telecommunications public limited company, London E1 8EE (GB)
(72) Inventor: ROSCOE, Jonathan, London EC4V 5BT (GB); HERCOCK, Robert, London EC4V 5BT (GB)
(74) Representative: British Telecommunications public limited company Intellectual Property Department
(86) International application number: PCT/EP2021/076483
(87) International publication number: WO 2022/069402

(56) References cited:
- WO-A1-2019/236470
- US-A1- 2017 024 384

## Description

The present invention relates to the identification of data items that are derivatives of other data items.

Data can be stored in data items such as files, records, streams or data objects including data such as documents, images, audio, video, web-pages, composite documents, and other well-known data formats, styles and structures. Such data is increasingly susceptible to misuse by the generation of adapted, manipulated or otherwise derived versions of data items. For example, deepfakes are data items such as images or videos in which a portion of data in an original data item is modified such as to include data not present in the original data item, or to exclude data originally present, or a combination of both. Such techniques have been used to generate, for example, images and videos including a likeness of a person or thing not present in an original. Equivalent misuse can arise in data items of other types of data, such as documents, audio, webpages and the like with data added and/or removed.

Such misuse can cause considerable damage, such as by misrepresenting individuals, organisations or data itself. Accordingly, there is a need to identify such misuse of data items.

US 2017/024384 A1 discloses a system and method for analyzing and searching imagery. Still and moving images that are stored on a network are expressed as feature vectors, which are then indexed in inverted indices. Hashes of the feature vectors are also stored in a hash database, with each set of similar hashes being placed in bucket. A visual search query is received and expressed as feature vectors, which are then hashed. Matches for the hashed query are searched for in the hash database to quickly find buckets of closely matching images. The feature vectors represented by the matched buckets may optionally be looked through in the indices to find closer, or fewer matches. When multiple inverted indices are searched, they are done so simultaneously, after which the results are aggregated and ordered according to a similarity metric.

WO 2019/236470 A1 discloses a system for collecting and distributing a digital audiovisual item captured by a sensor using a blockchain server. The system can comprise a security module that is coupled to the sensor and adapted to generate a private cryptographic key. The system can further include a blockchain-enabled hardware, coupled to the sensor and the security module. The hardware can generate a set of original hashes corresponding to the captured digital audiovisual item and an identifier having an address to the original hashes, embed information corresponding to the identifier in the captured digital audiovisual item to create a blockchain identified audiovisual item, and post the set of original hashes to a public blockchain using the private cryptographic key. Methods for collecting and distributing a digital audiovisual item captured by a sensor using a blockchain server are also provided.

According to a first aspect of the present invention, there is provided a computer implemented method of determining an association between disparate first and second data items as set out in appended claim 1.

Preferably, the plurality of feature extraction methods include one or more of: image noise extraction; colour distribution determination; intensity distribution; microtexture determination; structure determination; edge identification; object detection; metadata extraction; symbol frequency measurement; n-gram extraction; syntactic structure identification; and classification.

Preferably, the first and second data items include renderable media data and the association identifies the second data item as a deepfake.

Preferably, the set of hashes for the first data item are stored in a blockchain database for comparison with the set of hashes for the second data item to identify the intersect of the sets.

According to a second aspect of the present invention, there is a provided a computer system including a processor and memory storing computer program code for performing the steps of the method set out above.

According to a third aspect of the present invention, there is a provided a computer system including a processor and memory storing computer program code for performing the steps of the method set out above.

Embodiments of the present invention will now be described, by way of example only, with reference to the accompanying drawings, in which:
Figure 1 is a block diagram a computer system suitable for the operation of embodiments of the present invention;
Figure 2 is component diagram of an exemplary arrangement for determining an association between disparate first and second data items according to an embodiment of the present invention;
Figure 3 is a flowchart of a method of determining an association between disparate data items according to embodiments of the present invention.

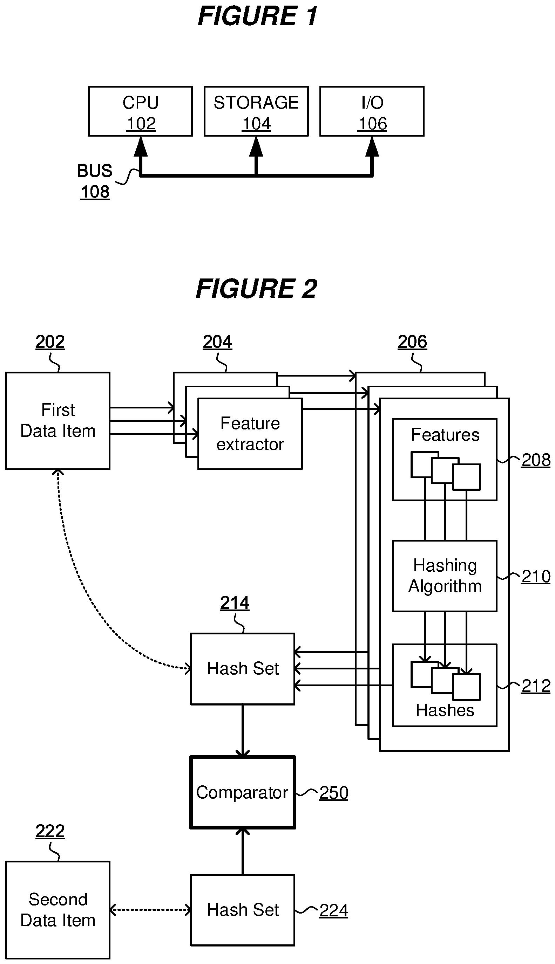

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Embodiments of the present invention provide for a determination of an association between different data items where one is at least partly derived from the other. The determination is based on evaluating cryptographic hashes across multiple different feature extraction methods to characterise each data item. Comparisons between data items then take place across the whole suite of feature extraction methods and features determined thereby based on comparisons of the hashes with common hashes indicating derivation. A conventional use of hashes detects even a smallest modification to data. However, such conventional use of hashes to compare data items fails to identify similarities in the data items. By the use of multiple feature extraction methods with hashing of results of each, similarities occurring in only a subset of features are detected to indicate commonality in the data items.

There is no limit on the number and type of features and feature extraction methods that can be employed - appropriate to the data type of data items. A greater number of features representing different perspectives and/or levels of detail within data items can provide a greater likelihood of identifying similarities between data items. For example, feature extraction techniques can include some or all of, inter alia: image noise extraction; colour distribution determination; intensity distribution; microtexture determination such as edge and corner determination; structure determination such as line, circle, square or other determination; edge identification; object detection such as may be achieved by machine learning techniques; metadata extraction such as Exchangeable Image File Format (EXIF), video, image or document metadata; symbol, meta-symbol, byte, word or phrase frequency measurement; n-gram extraction; syntactic structure identification; and classification such as machine learning classification by autoencoders or the like.

Embodiments of the invention are also suitable where an original data item is specifically modified to include features that are readily susceptible to detection by feature extraction techniques in order to improve an opportunity for detection of derivative data items. For example, noise, watermarks or other features could be inserted, combined or included in a data item to aid feature identification in a derivative.

Some embodiments of the invention generate hierarchies of sets of hashes for a composite data item comprising subsidiary data items included therein. For example, a webpage can include one or more textual or document elements in addition to one or more audiovisual elements such as images, video or sound. Performing feature extraction on constituent elements of a data item (such as by considering each constituent element as a data item in its own right) permits identification of derivatives of individual constituents without derivation of the entire webpage. A hierarchy of such sets of hashes for constituents can be generated as a data structure for subsequent use in detecting derivatives.

Figure 2 is component diagram of an exemplary arrangement for determining an association between disparate first 202 and second 222 data items according to an embodiment of the present invention. A comparator 250 is provided as a hardware, software, firmware or combination component for comparing hash sets 214 and 224 of cryptographic hashes generated on the basis of each of first 202 and second 222 data items respectively. Commonality of any hash values in the hash sets 214, 224 indicates identity of one or more features in the first 202 and second 222 data items and therefore an association between the first 202 and second 222 data items such that one data item is derived from the other.

The hash set 214 for the first data item 202 is generated based on a plurality of feature extractors 204 each using a disparate feature extraction method such as those described above. Each of the plurality of feature extractors is applied according to a feature extraction method 206 in which features 208 for the first data item 202 are extracted and each feature is processed by a hashing algorithm 210 to generate a hash 212. Thus, each extracted feature 208 for each feature extractor 204 generates a hash 212. For example, a feature can be generated as a representation of the feature such as a visual representation of a visual feature, or a numeric representation of a counting feature, or an symbolic representation of an extracted feature (such as text or the like). Such features are thus constituted as pieces of data in their own right susceptible to processing by application of the hashing algorithm 210 to generate a hash therefor. All hashes generated in this way across all feature extraction methods 206 are compiled into a hash set 214 as a representation of the first data item 202.

The hash set 224 for the second data item is generated in a corresponding manner. Whereas the particular set of feature extractors 204 applied to each data item need not be identical except that there need be overlap (i.e. common feature extraction methods applied) in order for the technique too succeed in identifying common hashes of common features between the data items, the hashing algorithm 210 must be the same for all data items to ensure consistency of hash calculation for common identical features.

The comparator 250 operates in any suitable manner such as by observing any non-empty intersection of the compared hash sets 214, 224 to determine at least some identical hashes. Identity of hashes in the hash sets 214, 224 is indicative of identical features in each of the first 202 and second 222 data items and derivation therebetween.

In one embodiment, the first 202 and second 222 data items are renderable media data items such as video data, image data or sound data, and a similarity therebetween determined by the comparator 250 is indicative of a deepfake.

In some embodiments, the first data item 202 is a known authoritative data item such as an original data item including data as originally generated, and the second data item 202 is determined to be derived from the first using the above described techniques. In such embodiments, access to derivative data items such as the second data item 222 is prevented. For example, the second data item 222 can be deleted or quarantined.

In one embodiment, the first data item 202 is a known authoritative data item such as an original data item including data as originally generated, and the second data item 202 is determined to be derived from the first using the above described techniques. In such an embodiment the hash set 214 for the first data item 202 can be stored in a distributed transactional database such as a blockchain database in order to auditably record the hash set 214 and/or to prove the authenticity of the first data item 202 in a non-repudiable manner (or at least a manner where repudiation is detectable via the blockchain). Subsequently, comparisons between a second 222 (derivative) data item and the original first data item 202 can determine the original data item based on the hash set 214 recorded to the blockchain.

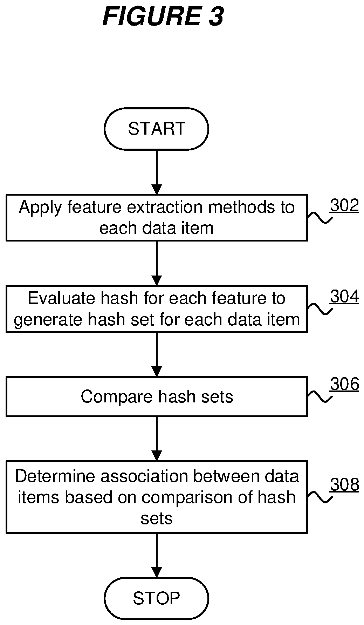

Figure 3 is a flowchart of a method of determining an association between disparate data items according to embodiments of the present invention. Initially, at step 302, the method applies a plurality of feature extraction methods to each of the first 202 and second 222 data items. At step 302 the method evaluates a hash for each feature extracted by each feature extraction method to generate a hash set 214, 224 for each data item. At step 306 the comparator 250 compares the hash sets 214, 224 to identify identical hashes so that, at step 308, the method determines associations between the data items based on the comparison of the hash sets 214, 224.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications.

## Claims

1. A computer implemented method of determining an association between disparate first and second data items wherein the second data item is at least partly derived from the first data item, the method comprising:
evaluating a cryptographic hash to each result of each of a plurality of disparate feature extraction methods, each feature extraction method being applied to each of the first and second data items to generate a set of hashes for each data item;
responsive to a non-empty set of hashes in the intersect of the sets of hashes for each data item, identifying an association between the first and second data items; the method further **characterized in that** responsive to the identification of an association, identifying the second data item as a derivative of the first data item, and responsive to the identification of the second data item being a derivative of the first data item, preventing access to the second data item.

2. The method of claim 1 wherein the plurality of feature extraction methods include one or more of: image noise extraction; colour distribution determination; intensity distribution; microtexture determination; structure determination; edge identification; object detection; metadata extraction; symbol frequency measurement; n-gram extraction; syntactic structure identification; and classification.

3. The method of any preceding claim wherein the first and second data items include renderable media data and the association identifies the second data item as a deepfake.

4. The method of any preceding claim wherein the set of hashes for the first data item are stored in a blockchain database for comparison with the set of hashes for the second data item to identify the intersect of the sets.

5. A computer system including a processor and memory storing computer program code for performing the steps of the method of any preceding claim.

6. A computer program element comprising computer program code to, when loaded into a computer system and executed thereon, cause the computer to perform the steps of a method as claimed in any of claims 1 to 4.

## Patentansprüche

1. Computerimplementiertes Verfahren zum Bestimmen einer Assoziation zwischen ungleichen ersten und zweiten Datenelementen, wobei das zweite Datenelement zumindest teilweise von dem ersten Datenelement abgeleitet ist, wobei das Verfahren Folgendes umfasst:
Auswerten eines kryptografischen Hash zu jedem Ergebnis von jedem mehrerer ungleicher Merkmalsextraktionsverfahren, wobei jedes Merkmalsextraktionsverfahren auf jedes der ersten und zweiten Datenelemente angewendet wird, um eine Menge von Hashes für jedes Datenelement zu erzeugen;
als Reaktion auf eine nicht-leere Menge von Hashes der Schnittmenge der Mengen von Hashes für jedes Datenelement, Identifizieren einer Assoziation zwischen dem ersten und zweiten Datenelement; wobei das Verfahren ferner **dadurch gekennzeichnet ist, dass**
als Reaktion auf die Identifikation einer Assoziation, Identifizieren des zweiten Datenelements als Derivativ des ersten Datenelements, und als Reaktion auf die Identifikation dessen, dass das zweite Datenelement ein Derivativ des ersten Datenelements ist, Verhindern des Zugriffs auf das zweite Datenelement.

2. Verfahren nach Anspruch 1, wobei die mehreren Merkmalsextraktionsverfahren eines oder mehrere der Folgenden beinhalten: Bildrauschextraktion; Farbverteilungsbestimmung; Intensitätsverteilung; Mikrotexturbestimmung; Strukturbestimmung; Kantenidentifikation; Objektdetektion; Metadatenextraktion; Symbolfrequenzmessung; n-Gramm-Extraktion; syntaktische Strukturidentifikation; und Klassifikation.

3. Verfahren nach einem der vorhergehenden Ansprüche, wobei das erste und zweite Datenelement darstellbare Mediendaten beinhalten und die Assoziation das zweite Datenelement als ein Deepfake identifiziert.

4. Verfahren nach einem der vorhergehenden Ansprüche, wobei die Menge von Hashes für das erste Datenelement zum Vergleich mit der Menge von Hashes für das zweite Datenelement, um die Schnittmenge der Mengen zu identifizieren, in einer Blockchain-Datenbank gespeichert wird.

5. Computersystem, umfassend einen Prozessor und einen Speicher, der einen Computerprogrammcode zum Durchführen der Schritte des Verfahrens nach einem der vorhergehenden Ansprüche speichert.

6. Computerprogrammelement, umfassend einen Computerprogrammcode, der, wenn er in ein Computersystem geladen und darauf ausgeführt wird, bewirkt, dass der Computer die Schritte eines Verfahrens nach einem der Ansprüche 1 bis 4 durchführt.

## Revendications

1. Procédé mis en œuvre par ordinateur pour déterminer une association entre des premier et second éléments de données disparates, le second élément de données étant au moins partiellement dérivé du premier élément de données, le procédé comprenant les étapes suivantes :
évaluer un hachage cryptographique à chaque résultat de chacune d'une pluralité de procédés d'extraction de caractéristiques disparates, chaque procédé d'extraction de caractéristiques étant appliqué à chacun des premier et second éléments de données pour générer un ensemble de hachages pour chaque élément de données ;
en réponse à un ensemble non vide de hachages dans l'intersection des ensembles de hachages pour chaque élément de données, identifier une association entre les premier et second éléments de données ;
le procédé étant en outre **caractérisé en ce que**,
en réponse à l'identification d'une association, le procédé comprend d'identifier le second élément de données en tant que dérivé du premier élément de données et, en réponse à l'identification du second élément de données en tant que dérivé du premier élément de données, empêcher l'accès au second élément de données.

2. Procédé selon la revendication 1, dans lequel la pluralité de procédés d'extraction de caractéristiques comprend un ou plusieurs des éléments suivants : l'extraction du bruit de l'image ; la détermination de la distribution des couleurs ; la distribution de l'intensité ; la détermination de la microtexture ; la détermination de la structure ; l'identification des bords ; la détection des objets ; l'extraction des métadonnées ; la mesure de la fréquence des symboles ; l'extraction de n-grammes ; l'identification de la structure syntaxique ; et la classification.

3. Procédé selon l'une quelconque des revendications précédentes, dans lequel les premier et second éléments de données comprennent des données multimédia pouvant être rendues et l'association identifie le second élément de données comme étant un faux de type deepfake.

4. Procédé selon l'une quelconque des revendications précédentes, dans lequel l'ensemble de hachages pour le premier élément de données est stocké dans une base de données de type blockchain pour être comparé à l'ensemble de hachages pour le second élément de données afin d'identifier l'intersection des ensembles.

5. Système informatique comprenant un processeur et mémoire stockant un code de programme informatique pour exécuter les étapes du procédé selon l'une quelconque des revendications précédentes.

6. Élément de programme informatique comprenant un code de programme informatique pour, lorsqu'il est chargé dans un système informatique et exécuté sur celui-ci, amener l'ordinateur à exécuter les étapes d'un procédé tel que revendiqué dans l'une quelconque des revendications 1 à 4.
